# EUROPEAN PATENT APPLICATION

(11) **EP 1 286 242 A1**
(43) Date of publication of application: **26.02.2003**
(21) Application number: 01120166.2
(22) Date of filing: 22.08.2001
(51) Int. Cl.: G06F 1/00

(54) **System and method for protected data input of security data**

(71) Applicant: Sonera SmartTrust, Ltd., 00510 Helsinki (FI)
(72) Inventor: Reif, Holger, 99096 Erfurt (DE); Narraway, David, Bagshot, Surrey GU19 5QT (GB); Nordberg, Marko, 00810 Helsinki (FI)
(74) Representative: Engel, Christoph Klaus

(57) **Abstract**

The present invention relates to a system and a method for protected data input of security data. The inventive system comprises an input device (1), an input device decoder (2), and security data processing means (10), whereby a scrambling device (7) is interconnected between the input device (1) and the input device decoder (2), whereby said scrambling device is able to pass on signals to said input device decoder, either encrypted in a secure mode or unchanged in a normal mode, and whereby the operation mode of said scrambling device is controlled by said security data processing means (10), which are able to decrypt the security data generated from said encrypted signals.

A preferred embodiment of the inventive system further comprises a descrambler that is interconnected into a serial control line of an output device and that receives a cryptographic key from a cryptographic device (10).

## Description

The present invention relates in general to data security systems and more particularly to a system for protected data input of security data comprising an input device, an input device decoder that receives signals from the input device and generates input data and security data processing means. The invention relates furthermore to a method for protected data input of security data.

In order to fulfill the increased need for security during data processing and data transmission conventional systems use security information or security data to protect either data transmission or the data to be transmitted, for instance by encrypting, to get access to certain resources or to ensure data or user authentication. For instance, Personal Identification Number (PIN) are used to enable safe data transmission, e.g. in electronic banking applications by using appropriate software. In the following the term "security data" covers in a broader sense all and any information requiring increased secrecy needs, which are reserved for authorized persons only and enable access to other determined information. In practice, security data is for instance a PIN releasing the access to a cryptographic key being stored at a data medium or memory. For other applications, the cryptographic key itself could represent the security data.

US 6,054,940 describes a key pad scanning security system that uses a secure key pad device incorporating measures to prohibit electronic eavesdropping. However, the aim of this state of the art is not the direct protection of data or information.

A computer keyboard console containing an integrated card reader is known from US 6,056,193. The card reader is able to read so-called smart cards and to process security information stored on the smart card in a suitable form. However, existing keyboards cannot be equipped additionally with the required card readers. On the contrary exchange of the existing keyboard would be required when this security means should be used. The illustrated security system can only be applied at matrix keyboards and requires an additional display unit for preventing so-called "spoofing attacks". Furthermore the system make use of a dedicated microprocessor and cannot use existing input device decoder and/or input device driver of the connected data processing system. Thus the costs of such a system are high and the flexibility is low.

US 5,493,613 explains a combination PIN pad and terminal. There a full control of output device is needed. This would require to implement a whole driver for a complex display (e.g. telephone or handheld device).

Many computers and data processing devices employ operating system software that not provides a guaranteed secure channel for input of security data. Applications usually acquire data from the user by invoking services provided by the personal trusted device. Usual computer architectures employ an input device, which is normally connected to an input device decoder. The input device decoder is programmed by an input device driver, which is part of the operating system software of the host device or computer. The input device driver finally delivers the symbol that has been entered. Generally spoken, from the input data path point of view, the overall system consists of an input device and possibly further building blocks, that cannot be controlled by or interfered with any non-security application in order to get information on the actual value of the input, like a keyboard matrix; some building blocks (either software or hardware), that might be controlled by and/or interfered with some non-security application in order to get information on the actual value of the input, such as an input device driver; and the non-security application itself. Rogue software applications could grasp to security data by monitoring the operating system software or the input device driver. Snooping attacks could take place to find out user's PIN or other confidential data. It is also possible that spoofing attacks could occur if a rogue software application requests the input of security data, whereby the user is of the opinion that authorized software requests for the security data.

Accordingly, there is a need for a system for protected data input of security data. A subject of the present invention is to implement a safe terminal device. A further subject of the present invention is to provide a system and a method by which a user can enter secret information in a way that only authorized software can use it and other programs running on the system cannot get that information. A focus of the invention is how to enter a Personal Identification Number (PIN) to access private key that is needed when a digital signature is created using a public key encryption algorithm.

According to the present invention, a system is-provided, whereby a scrambling device is interconnected between the input device and the input device decoder, whereby said scrambling device is able to pass on the signals to said input device decoder, either modified in a secure mode or unchanged in a normal mode, whereby the operation mode of said scrambling device is controlled by said security data processing means, which are able to decrypt the security data generated from said encrypted signals.

A main advantage of the present invention is that any rouge application that has intercepted the user's input by monitoring the operating system software will be unable to determine the actual input of security data since it will have been scrambled in an unpredictable manner. Furthermore, the invention provides the advantage that both the input device decoder and the input device driver serve its usual purposes. Thus no additional device driver or software application is necessary to decode the signals generated by the input device. The input device driver may take care of keybounce as well.

According to a preferred embodiment, the system further comprises a secure mode indicator, which is controlled by said security data processing means and indicates the secure mode. In generally the secure mode is activated for the time of inputting security data. When using the secure mode indicator an authorized application is able to indicate the request of security data and the activation of the secure operation mode. If the user of the system detects that an application requests the input of security data although the secure mode indicator does not indicate the secure operation mode he will not enter security data like a PIN.

An adapted embodiment has a cryptographic device as security data processing means and a line monitor, which is interconnected between a host processor and said cryptographic device to monitor requesting of a protected input, whereby said line monitor is able to activate the secure mode of the scrambling device and to turn on the secure mode indicator to indicate secure mode to the user. Advantageously a tamperproof cryptographic device is used, e.g. a smart card reader with a smart card. Such a line monitor is needed if conventional cryptographic devices are implemented with smart cards, which have only a single serial input/output line and cannot count on the connected host processor to maintain security state and to execute the request for protected input in a safe manner.

According to a modified embodiment said security data processing means is a security software application running on a host processor (CPU). This way conventional systems can be upgraded with a scrambling device, to produce an inventive secure system.

Furthermore, according to the present invention a method for protecting the data input of security data is provided. The method comprises the steps of:
- activating a secure mode of a scrambling device, which is interconnected between an input device and an input device decoder, if security data are requested by security data processing means;
- encrypting signals generated by the input device within the scrambling device;
- transferring the encrypted signals to an input device decoder to create encrypted data;
- decrypting the encrypted data within said security data processing means to obtain the security data;
- activating a normal mode of the scrambling device, without encryption of the signals generated by the input device.

According to a preferred embodiment of the method the step of encrypting signals takes place by mixing the signal lines, which feed the signals from the input device to the input device decoder. This is a very simple possibility to scramble the signals and so it is cheaply and easy to implement in conventional systems.

The features of the invention are set forth with particularity in the appended claims. The invention itself together with its further objects and advantages thereof, may be best understood by reference to the following detailed description when taken in conjunction with the accompanying drawing. The figures show:
- Fig. 1: a block diagram in principle of a first embodiment of the inventive system including a secure software application;
- Fig. 2: a block diagram in principle of a second embodiment including a line monitor.

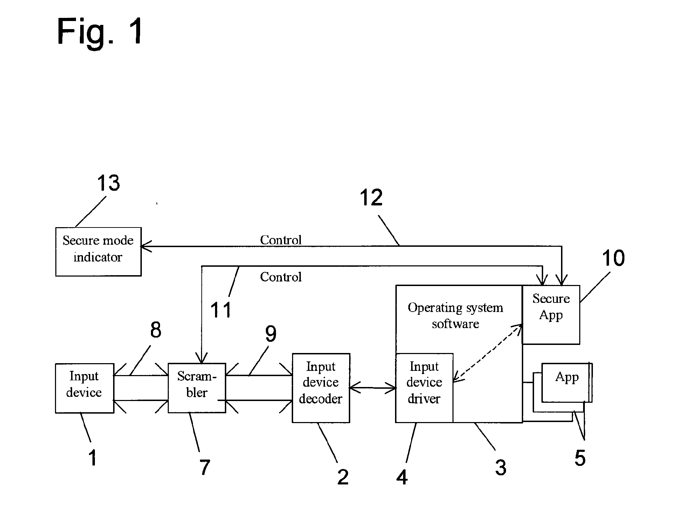

Fig. 1 shows a block diagram of a system for protected data input of security data. The system includes an input device 1 and an input device decoder 2. For example, a typical PC keyboard contains both the input device (key matrix) and the input device decoder (keyboard controller). Furthermore the system comprises operating system software running on a Central Processor Unit (CPU) 3, so far as the inventive system is realized with a microprocessor and software applications running on said microprocessor. An input device driver 4 is part of the operating system software or works together with the operating system software. Some software applications 5 run based on operating system software during a normal operation mode of the microprocessor 3.

Like in conventional computer systems, the input device is connected to the input device decoder by a number of signal lines. The input device decoder is programmable by the input device driver and transfers the decoded input signals as input data to the input device driver. The input device driver finally delivers the symbol that has been entered by the user for further processing within the software applications. For example, the input device consists of a matrix with switches at each cross representing the keys of the input device. In this case, the input device decoder would consist of a parallel input/output controller, which multiplexes data lines to and from the matrix, identifies the switch that has been closed by pressing the key and delivers an identifier corresponding to that switch (e.g. a scan code). The input device driver takes the switch identifier and computes the symbol that corresponds to that key. The input device decoder and/or the input device driver may take care of keybounce and repetition as well.

According to the present invention there exists a scrambling device 7, which is interconnected between the input device 1 and the input device decoder 2. The scrambling device 7 scrambles or encrypts the signals provided by the input device 1. The encryption of the signals takes place right next to the input device. Thus, no hardware means or software application is able to read the signals of the input device before they are fed into the scrambling device 7.

The scrambling device 7 is able to pass on the signals to the input device decoder 2. Dependent on the operation mode, the scrambling device encrypts the signals in a secure mode or passes on the signals unchanged in a normal mode. The simplest way of encryption of the signals is to mix the signal lines between the input device and the input device decoder. For this an arbitrary value (i.e. encryption key) can be written to some multiplexer control circuits, which will have the effect of mixing the keyboard scan and input lines in an unpredictable manner. In the normal operation mode or non-secure mode, the scrambling device is deactivated. In case of a matrix keypad that means each line of a first line bundle 8 is connected to corresponding line of a second line bundle 9, which connects the scrambling device 7 to the input device decoder 2. Consequently, the presence of that scrambling device is not obvious to the operating system software running on the microprocessor.

The inventive system includes further security data processing means 10, which is a security software application in the embodiment depicted in Fig. 1. The security software will be executed by the microprocessor 3 in connection with the operating system software. Security data processing means 10 have a first direct connection 11 to the scrambling device 7, in order to control the operation mode of it. By using this first direct connection 11, it is possible to activate the security mode of the scrambling device 7. The security software application 10 will activate the security mode if input of security data is required. During the secure mode the signals created by the input device 1 will be passed on to the input device decoder in a scrambled or encrypted form. The security software application knows the cryptographic key or the scrambling algorithm and is able to decrypt the data generated by the input device driver 4 during the secure mode. However, no other application, e.g. rogue software, is able to read or understand the correct security data entered by the user.

A modified embodiment of the inventive system comprises cryptographic key generation means. This key generation means could be integrated within the security data processing means. The cryptographic key generation means creates a cryptographic key and transmits the generated key to the scrambling device 7 and if necessary to the security data processing means 10. The cryptographic key can be used for encryption of the signals within the scrambling device 7 during one period of inputting security data. It is possible to use one cryptographic key for a number of encryption phases or to implement a fixed cryptographic key in the scrambling device. In an adapted embodiment, it is possible to create a new cryptographic key for each encryption period or if necessary for each consecutive entered symbol, if great security demands exist. As above mentioned in case of the matrix example the scrambler may just swap different lines, e.g. connect output line A of first line bundle 8 with output line C of second line bundle 9; same holds for input lines. Effectively this results in virtual re-mapping of the key matrix.

Accordingly the input device driver will not identify the correct switch of the matrix that has been closed but identify a wrong one and consequently deliver the wrong symbol. A malicious application cannot snoop the entered key. The secure application, knowing about the re-mapping, can compute the right symbol. After collecting all symbols composing the security data (e.g. the PIN) the data are checked.

Another mode of operation does not need to know about the actual value of the PIN. If the scrambling algorithm and parameters are the same for PIN initialization and PIN verification, the actual value of the PIN is irrelevant.

Returning to Fig. 1, the security data processing means 10 are connected via a second direct connection 12 to a secure mode indicator 13. The secure mode indicator 13 could be a stand-alone-device or could be integrated in a usual output device, e.g. a display. The security mode indicator 13 can only be controlled by security data processing means or security software application. The secure mode indicator 13 is activated only during the secure mode of the scrambling device 7. In such manner the user can see whether or not the secure mode is activated and would never enter security data like a PIN if security mode indicator does not show the secure operation mode.

A typical procedure to operate the system is the following: If the secure software application wants to get a PIN entry to authenticate the user, the secure mode indicator 13 is activated indicating to the user the entry of PIN is protected. Furthermore the scrambling device 7 is activated and set to the secure mode. After inputting the PIN the secure mode indicator 13 is switched off and the scrambling device 7 is set to the normal operation mode (insecure mode).

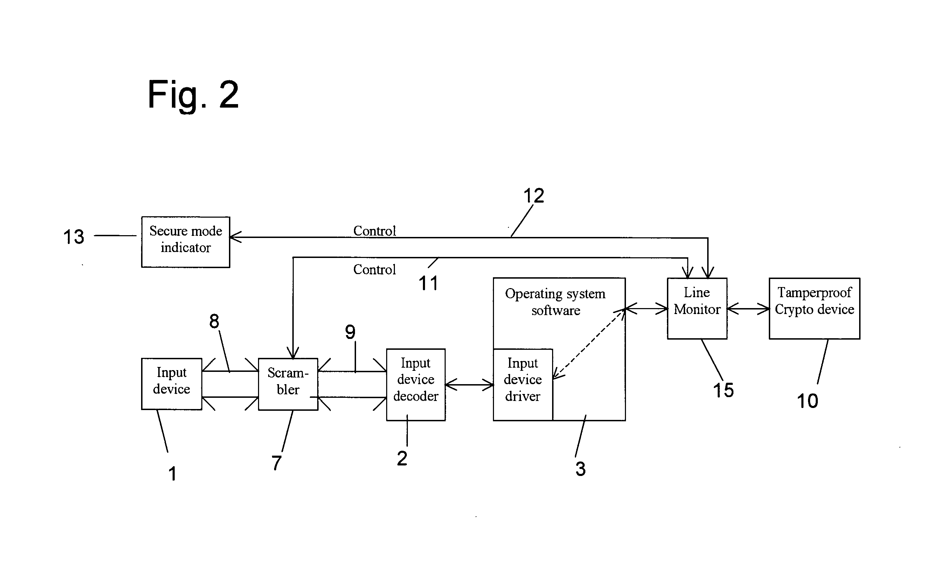

Fig. 2 shows a block diagram of a modified embodiment of the inventive system. Components of the same kind as in Fig. 1 are labeled with the same reference signs. The main difference to the above-mentioned embodiment is that the security data processing means is a tamperproof cryptographic device 10 and that a line monitor 15 is interconnected between a microprocessor (CPU) 3 and said cryptographic device 10 at a serial input/output line 16 that connects microprocessor to cryptographic device.

The operation of this embodiment is described now concerning the creation of a digital signature. A software program running on the microprocessor wants to create a digital signature. For this purpose it make use of the tamperproof cryptographic device 10. Cryptographic functions can be used only if the user has entered correct PIN codes. Encryption of the PIN code must be done by the scrambling device 7 with the key provided by the cryptographic device 10. The cryptographic key can be different each time when PIN code is used. Tamperproof cryptographic device holds the users secret keys and offers cryptographic functions, like digital signature, calculating message authentication code, one-time password or communication key. Examples of these devices are subscriber identity module (SIM) or wireless identity module (WIM).

The line monitor 15 is interconnected in the input/output line 16 between the microprocessor 3 and the cryptographic device 10. When the line monitor 15 detects a special command sequence to start the secure mode, it will activate the secure mode of the scrambling device 7, i.e. the safe PIN entry. In the above-mentioned manner, the scrambling device 7 is used to encrypt the security data, i.e. PIN. The scrambling device gets the encryption key from the cryptographic device 10 through the line monitor 15 or from separate cryptographic key generation means (not shown). The line monitor also controls the secure mode indicator 13, which is part of the output device in this case. A line monitor is needed because conventional cryptographic devices are implemented with smart cards and they have only a single serial input/output line. Conventional smart cards are unable to control a scrambling device directly. Of course, it is possible to develop a new smart card generation with the possibility of direct controlling of a scrambling device.

The secure mode indicator 13 could be a light emitting diode (LED) or a segment in liquid crystal display (LCD). If output device is controlled with a serial line, secure mode indicator could be replaced with a descrambler on that line. In this case, the cryptographic device and the user will share a secret not known to the software applications running on the microprocessor. Cryptographic device sets the scrambling device to secure mode, sends the secret encrypted to the microprocessor that consecutively sends it to the output device. Descrambler decrypts the secret and it will appear in clear text to the user, indicating that it is safe to enter the security data. Such a secret could be a text or a picture. This descrambler effectively works the same way as for input of protected data.

As an example, the method for making a digital signature will be described now. If any software program provides data to be digitally signed, the program requests the signing service from the cryptographic device 10, like a smart card inserted into a smart card reader. Thereupon the cryptographic device 10 (or the microprocessor 3) sends a special command (byte sequence) to activate the line monitor 15. As a result the line monitor 15 takes control over the input/output line and blocks the data transmission between microprocessor 3 and cryptographic device 10. In a modified embodiment, the line monitor 15 continuously checks the data transfer on line 16 so that itself notes the request of producing a digital signature. In the next step, the cryptographic device 10 continues by sending an encryption key to the line monitor 15. Of course the line monitor could receive the encryption key from separated key generation means or create the key by itself. Consequently the line monitor 15 transfers the cryptographic key to the scrambling device 7 and activates the secure mode indicator 13, in order to display beginning of the secure mode. Now line monitor 15 can release the line 16, i.e. connecting the software program running on the microprocessor to the cryptographic device 10. Line monitor 15 or cryptographic device 10 sends a "secure mode on" result to the program and program asks the user to enter the PIN code for using digital signature. The user finds out from the secure mode indicator 13 that secure mode is activated and enters the required PIN code. The scrambling device 7 encrypts the signals received from input device 1 representing the PIN code. The encrypted signals delivered from the scrambling device will be handled by the input device driver in the known manner. As soon as all security data, i.e. PIN code was inputted, the program sends a determined command to the line monitor 15, in order to stop the secure operation mode and go back to the normal operation mode. Line monitor 15 turns off the secure mode indicator 13 and sets the scrambling device 7 to normal mode. Program sends data to be signed together with encrypted PIN code to the cryptographic device 10, which first decrypts the PIN using the previously set cryptographic key. After verifying PIN the cryptographic device signs the data and sends it back to the microprocessor and the software application respectively.

It is to be noted that adapted embodiments are possible, e.g. the implementing of the described components within ASIC's (application specific integrated circuits).

It is apparent from this that the inventive system and method enable the protected data input. The described secure part of the system offers a more secure input service to any other applications.

## Claims

1. System for protected data input of security data, comprising:
• an input device (1);
• an input device decoder (2), which receives signals from the input device and generates input data;
• security data processing means (10);
**characterised in that** a scrambling device (7) is interconnected between the input device (1) and the input device decoder (2), whereby said scrambling device is able to pass on the signals to said input device decoder, either encrypted in a secure mode or unchanged in a normal mode, whereby the operation mode of said scrambling device is controlled by said security data processing means (10), which are able to decrypt the security data generated from said encrypted signals.

2. System according to claim 1, further comprising a secure mode indicator (13), which is controlled by said security data processing means (10) and indicates the secure mode, whereby said secure mode is activated for the time of inputting security data.

3. System according to claim 2, **characterised in that** said security data processing means is a cryptographic device (10), and **in that** a line monitor (15) is interconnected between a microprocessor (3) and said cryptographic device to monitor requesting of an encrypting process, whereby said line monitor is able to activate the secure mode of the scrambling device (7) and to set the secure mode indicator (13) to indicate the secure mode to a user.

4. System according to claim 3, **characterised in that** said cryptographic device (10) is a smart card including a private key of an asymmetric key pair.

5. System according to claim 3 or 4, **characterised in that** said secure mode indicator is replaced with a descrambler that is interconnected into a serial control line of an output device and that receives a cryptographic key from said cryptographic device (10).

6. System according to claim 1 or 2, **characterised in that** said security data processing means is a security software application (10) running on a microprocessor (3).

7. System according to any of the preceding claims, further comprising cryptographic key generation means, which generate a new cryptographic key every time if the secure mode is activated.

8. System according to any of the preceding claims, **characterised in that** the scrambling device (7) uses different cryptographic keys for consecutive input signals in the same period of secure mode.

9. System according to any of the claims 1 to 7, **characterised in that** the scrambling device (7) mixes some of the signal lines (8, 9) between the input device and the input device decoder while being in the secure mode, for the purpose of encrypting the signals.

10. Method for protecting the data input of security data comprising the steps of:
• activating a secure mode of a scrambling device (7), which is interconnected between an input device (1) and an input device decoder (2), if security data are requested by security data processing means (10);
• encrypting signals generated by the input device (1) within the scrambling device (7);
• transferring the encrypted signals to the input device decoder (2) to create encrypted data;
• decrypting the encrypted data within said security data processing means (10) to obtain the security data;
• activating a normal mode of the scrambling device (7), without encryption of the signals generated from the input device (1).

11. Method according to claim 10, further comprising the step of indicating the secure mode by activating a secure mode indicator (13), which is controlled exclusive by said security data processing means (10).

12. Method according to claim 10 or 11, whereby the step of encrypting signals takes place by mixing the signal lines (8, 9), which feed the signals from the input device (1) to the input device decoder (2).

13. Method according to any of the claims 10 to 12 further comprising the steps of generating a cryptographic key and using said cryptographic key for encrypting the signals generated by the input device (1) and for decrypting the encrypted data delivered by the input device decoder (2).
